# EUROPÄISCHE PATENTSCHRIFT

(11) **EP 3 152 479 B1**
(45) Veröffentlichungstag und Bekanntmachung des Hinweises auf die Patenterteilung: **27.10.2021**
(21) Anmeldenummer: 15725535.7
(22) Anmeldetag: 13.05.2015
(51) Int. Cl.: F21S 41/63, F21S 41/16

(54) **BELEUCHTUNGSEINRICHTUNG**
ILLUMINATION DEVICE
DISPOSITIF D'ÉCLAIRAGE

(30) Priorität: 03.06.2014 DE 102014210497
(43) Veröffentlichungstag der Anmeldung: 12.04.2017
(73) Patentinhaber: OSRAM Beteiligungsverwaltung GmbH, 82031 Grünwald (DE)
(72) Erfinder: HAGER, Jürgen, 89542 Herbrechtingen (DE); HELBIG, Philipp, 89522 Heidenheim (DE); SCHWAIGER, Stephan, 89081 Ulm (DE); MUSTER, Jasmin, 89522 Heidenheim (DE)
(74) Vertreter: OSRAM GmbH - GC IP
(86) Internationale Anmeldenummer: PCT/EP2015/060627
(87) Internationale Veröffentlichungsnummer: WO 2015/185339

(56) Entgegenhaltungen:
- EP-A1- 2 199 664
- WO-A1-2010/006614
- WO-A1-2012/171333
- DE-A1- 10 321 564
- DE-A1-102004 020 493
- DE-A1-102009 054 101
- DE-C2- 10 005 795
- US-A1- 2006 139 918
- US-A1- 2013 258 689
- US-A1- 2014 029 279

## Beschreibung

Die Erfindung betrifft eine Beleuchtungseinrichtung gemäß dem Oberbegriff des Anspruchs 1.

### I. Stand der Technik

Eine derartige Beleuchtungseinrichtung ist beispielweise in der Offenlegungsschrift DE 10 2010 062 463 A1 offenbart. Diese Schrift beschreibt eine Beleuchtungseinrichtung für Fahrzeuge mit zwei Halbleiterlaserlichtquellen, deren Licht jeweils auf ein Lichtwellenlängenkonversionselement gelenkt wird, und einem Reflektor, der von den Lichtwellenlängenkonversionselementen ausgehendes Licht auf die Straße reflektiert.

Ferner ist in der Druckschrift US 2014/0029279 A1 ein Schweinwerfersystem mit adaptiver Lichtstrahlführung beschrieben. Eine einen Leuchtstoff zur Wellenlängenkonversion aufweisende Lichtquelle im Scheinwerfer wird durch Licht aus einer Vielzahl von Laseremittern bestrahlt, die individuell steuerbar sind, um eine Intensitätsverteilung über die Lichtquelle zu erhalten. Den Laseremittern und den von ihnen abgegebenen Laserstrahlen kann jeweils ein optisches Kontrollelement zugeordnet sein, mit dessen Hilfe die Richtung, Ausrichtung und Aufweitung bzw. Fokussierung des Strahls in Richtung auf die Lichtquelle kontrolliert werden kann. Das optische Kontrollelement kann eine Beugungslinse sein. Die jeweils bereitgestellten optischen Kontrollelemente können darüber hinaus mit Hilfe von Aktuatoren, bei denen es sich auch um piezoelektrische Elemente handeln kann, bewegt - beispielweise gekippt, gedreht oder axial verschoben - werden, um die Intensitätsverteilung in der Lichtquelle weitergehend zu beeinflussen.

### II. Darstellung der Erfindung

Es ist Aufgabe der Erfindung, eine gattungsgemäße Beleuchtungseinrichtung bereitzustellen, die es ermöglicht, eine wunschgemäße Lichtverteilung auf einer vom Lichtwellenlängenkonversionselement definierten Zwischenebene zu generieren und zusätzlich die Lichtverteilung an Änderungen der Verkehrssituation anzupassen.

Diese Aufgabe wird erfindungsgemäß durch eine Beleuchtungseinrichtung mit den Merkmalen aus dem Anspruch 1 gelöst. Besonders vorteilhafte Ausführungen der Erfindung sind in den abhängigen Ansprüchen beschrieben.

Die erfindungsgemäße Beleuchtungseinrichtung besitzt mehrere Halbleiterlichtquellen und mindestens ein Lichtwellenlängenkonversionselement zur Wellenlängenkonversion des von den Halbleiterlichtquellen emittierten Lichts.

Die erfindungsgemäße Beleuchtungseinrichtung besitzt mehrere Halbleiterlichtquellen und mindestens ein Lichtwellenlängenkonversionselement zur Wellenlängenkonversion des von den Halbleiterlichtquellen emittierten Lichts. Erfindungsgemäß ist jeder Halbleiterlichtquelle mindestens eine lichtbrechende Optik zugeordnet, die dazu ausgebildet ist, von der jeweiligen Halbleiterlichtquelle emittiertes Licht auf das mindestens eine Lichtwellenlängenkonversionselement zu lenken, wobei mindestens eine lichtbrechende Optik beweglich bezüglich der Halbleiterlichtquelle angeordnet ist, der sie zugeordnet ist.

Dadurch kann auf einer Oberfläche des mindestens einen Lichtwellenlängenkonversionselements eine veränderliche, an die aktuelle Verkehrssituation angepasste Lichtverteilung generiert werden. Die mindestens eine lichtbrechende Optik erlaubt eine Strahlformung des von der jeweiligen Halbleiterlichtquelle emittierten Lichts und insbesondere auch eine Fokussierung des von der jeweiligen Halbleiterlichtquelle emittierten Lichts auf eine Oberfläche des mindestens einen Lichtwellenlängenkonversionselements. Hierbei kann das von den Halbleiterlichtquellen emittierte Licht mittels der mindestens einen, lichtbrechenden und beweglichen Optik auf identische oder unterschiedliche oder einander überlappende Oberflächenabschnitte des mindestens einen Lichtwellenlängenkonversionselements gelenkt werden, um die wunschgemäße Lichtverteilung zu erzeugen. Insbesondere ermöglicht die erfindungsgemäße Beleuchtungseinrichtung auch eine Ausleuchtung desselben Abschnitts des mindestens einen Lichtwellenlängenkonversionselements mit Licht, das von mehreren Halbleiterlichtquellen emittiert wird, indem Licht von mehreren Halbleiterlichtquellen mit Hilfe der mindestens einen beweglichen Optik auf denselben Oberflächenabschnitt des mindestens einen Lichtwellenlängenkonversionselements gelenkt wird. Dadurch kann beispielsweise eine Ausleuchtung eines Oberflächenabschnitts des mindestens einen Lichtwellenlängenkonversionselements mit gleichbleibender Lichtintensität erreicht werden, wenn die Halbleiterlichtquellen aufgrund von starker thermischer Belastung mit reduzierter Leistung betrieben werden müssen.

Die Halbleiterlichtquellen der erfindungsgemäßen Beleuchtungseinrichtung sind als Laserdioden ausgebildet, um Licht mit hoher Leuchtdichte gewährleisten zu können, wie es für eine Anwendung in Fahrzeugscheinwerfern benötigt wird.

Das mindestens eine Lichtwellenlängenkonversionselement der erfindungsgemäßen Beleuchtungseinrichtung ist vorzugsweise als Leuchtstoffelement ausgebildet, das zumindest einen Teil des von den Halbleiterlichtquellen emittierten Lichts in Licht mit anderer Wellenlänge konvertiert, so dass vom Leuchtstoffelement konvertiertes und nicht-konvertiertes Licht abgestrahlt wird. Vorzugsweise ist die Leuchtstoffzusammensetzung des Leuchtstoffelements derart auf die Wellenlänge des von den Halbleiterlichtquellen emittierten Lichts abgestimmt, so dass die Mischung aus am Leuchtstoff konvertiertem Licht und nicht-konvertiertem Licht weißes Licht ergibt, das den gesetzlichen Anforderungen für weißes Licht bei Fahrzeugscheinwerfern genügt. Es ist aber auch möglich, das Lichtwellenlängenkonversionselement derart auszubilden, dass das gesamte emittierte Licht der Halbleiterlichtquellen in Licht mit anderer Wellenlänge konvertiert wird.

Vorzugsweise sind aus den vorgenannten Gründen die Halbleiterlichtquellen der erfindungsgemäßen Beleuchtungseinrichtung als Laserdioden ausgebildet, die während ihres Betriebs blaues Licht mit einer Peak-Wellenlänge aus dem Wellenlängenbereich von 430 Nanometer bis 470 Nanometer emittieren, das heißt, das von den Laserdioden emittierte Licht besitzt ein Intensitätsmaximum im vorgenannten Wellenlängenbereich. Das mindestens eine Lichtwellenlängenkonversionselement der erfindungsgemäßen Beleuchtungseinrichtung enthält vorzugsweise mit Cer dotiertes Yttriumaluminiumgranat YAG:Ce als Leuchtstoff, der das von den Laserdioden emittierte blaue Licht anteilig in gelbes Licht mit einem Intensitätsmaximum im Wellenlängenbereich von 500 bis 600 Nanometer konvertiert, so dass das mindestens eine Lichtwellenlängenkonversionselement weißes Licht abstrahlt, das eine Mischung aus nicht-konvertiertem blauem und konvertiertem gelbem Licht ist.

Vorteilhafterweise ist die mindestens eine lichtbrechende Optik der erfindungsgemäßen Beleuchtungseinrichtung schwenkbar oder verschiebbar oder drehbar, oder schwenkbar und verschiebbar, oder schwenkbar und drehbar, oder verschiebbar und drehbar, oder schwenkbar und verschiebbar und drehbar ausgebildet. Durch eine schwenkbare Ausbildung der mindestens einen lichtbrechenden Optik kann auf einfache Weise erreicht werden, dass unterschiedliche Bereiche des mindestens einen Lichtwellenlängenkonversionselements und insbesondere unterschiedliche Oberflächenabschnitte des mindestens einen Lichtwellenlängenkonversionselements mit Licht beleuchtet werden, das von der jeweiligen Halbleiterlichtquelle emittiert wurde. Eine verschiebbare Anordnung der mindestens einen lichtbrechenden Optik bezüglich der ihr zugeordneten Halbleiterlichtquelle ermöglicht eine relative räumliche Ausrichtung von lichtbrechender Optik und der ihr zugeordneten Halbleiterlichtquelle. Eine Verschiebung in Form einer Veränderung des Abstands zwischen der mindestens einen lichtbrechenden Optik und der ihr zugeordneten Halbleiterlichtquelle, ermöglicht insbesondere eine Vergrößerung oder Verkleinerung des auf dem mindestens einen Lichtwellenlängenkonversionselement erzeugten Lichtflecks. Durch eine Rotation der mindestens einen lichtbrechenden Optik um eine optische Achse kann die Polarisationsrichtung des Laserstrahls oder die Orientierung der sogenannten Fast Axis des Laserstrahls verändert werden.

Die Halbleiterlichtquellen der erfindungsgemäßen Beleuchtungseinrichtung sind vorteilhafterweise auf einem gemeinsamen Träger angeordnet. Dadurch können sie in einem gemeinsamen Fertigungsverfahren hergestellt werden und der gemeinsame Träger kann außerdem als Kühlkörper für die Halbleiterlichtquellen ausgebildet sein und mit elektrischen Komponenten einer Betriebsvorrichtung für die Halbleiterlichtquellen bestückt sein. Außerdem gewährleistet der gemeinsame Träger für die Halbleiterlichtquellen eine ortsfeste Anordnung der Halbleiterlichtquellen zueinander.

Erfindungsgemäß ist die mindestens eine lichtbrechende Optik auf dem gemeinsamen Träger für die Halbleiterlichtquellen angeordnet. Dadurch kann die mindestens eine lichtbrechende Optik auf einfache Weise bezüglich der ihr zugeordneten Halbleiterlichtquelle ausgerichtet und befestigt werden. Außerdem können dadurch die Halbleiterlichtquellen und die mindestens eine lichtbrechende Optik als vorgefertigtes Modul der erfindungsgemäßen Beleuchtungseinrichtung ausgebildet sein.

Erfindungsgemäß besitzt die erfindungsgemäße Beleuchtungseinrichtung eine Bewegungsvorrichtung, die mindestens ein piezoelektrisches Element umfasst, zum Bewegen der mindestens einen lichtbrechenden Optik. Dadurch wird auf einfache Weise eine Bewegung der mindestens einen lichtbrechenden Optik bezüglich der Halbleiterlichtquellen ermöglicht. Vorzugsweise sind mindestens drei piezoelektrische Elemente vorgesehen, um die mindestens eine lichtbrechende Optik sowohl verschiebbar als auch schwenkbar auszubilden. Insbesondere ermöglichen mindestens drei piezoelektrische Elemente sowohl eine Translation der mindestens einen lichtbrechenden Optik parallel zu einer Oberfläche des Trägers, auf der die Halbleiterlichtquellen angeordnet sind, als auch eine Translation senkrecht zu dieser Oberfläche, das heißt, eine Veränderung des Abstands zwischen der mindestens einen lichtbrechenden Optik und den Halbleiterlichtquellen. Zusätzlich ermöglichen mindestens drei piezoelektrische Elemente auch eine Schwenkbewegung der mindestens einen lichtbrechenden Optik um zwei parallel zur vorgenannten Oberfläche des Trägers verlaufende Schwenkachsen, die durch die Position der mindestens drei piezoelektrischen Elemente auf dem Träger definiert sind. Zusätzlich können weitere piezoelektrische Elemente zur Rotation der mindestens einen lichtbrechenden Optik um ihre optische Achse vorgesehen sein, um beispielsweise die Polarisationsrichtung des Laserlichts zu ändern oder um die Ausrichtung der sogenannten Fast-Axis des Laserlichts zu verändern. Die mindestens eine bewegliche Optik kann zu diesem Zweck asymmetrisch bezüglich Rotation um ihre optische Achse ausgebildet sein.

Die erfindungsgemäße Beleuchtungseinrichtung weist vorzugsweise eine Betriebsvorrichtung zum Betreiben der Halbleiterlichtquellen auf. Die Betriebsvorrichtung erzeugt aus der Versorgungsspannung, insbesondere der Bordnetzspannung eines Kraftfahrzeugs, die zum Betreiben der Halbleiterlichtquellen erforderlichen elektrischen Ströme und Spannungen. Dadurch wird kein externes Betriebsgerät für die Beleuchtungseinrichtung benötigt. Die Betriebsvorrichtung der erfindungsgemäßen Beleuchtungseinrichtung ist vorzugsweise derart ausgebildet, dass sie eine Helligkeitssteuerung, beispielsweise durch eine Amplitudenmodulation oder Pulsweitenmodulation oder eine Kombination von Amplitudenmodulation und Pulsweitenmodulation des Halbleiterlichtquellenstroms, der einzelnen Halbleiterlichtquellen ermöglicht, um eine weitere Option zur Variation der Lichtverteilung bereitzustellen und um außerdem im Fall einer starken thermischen Belastung der Beleuchtungseinrichtung die elektrische Leistung und damit die Helligkeit der Halbleiterlichtquellen reduzieren zu können. Insbesondere kann die Betriebsvorrichtung auch mit einer übergeordneten Elektronikeinheit kommunizieren, die als Master für die Betriebsvorrichtung dient und die benötigte Lichtverteilung z.B. von einer wiederum übergeordneten Fahrzeugelektronik zur Verfügung gestellt bekommt. Die übergeordnete Elektronikeinheit übernimmt die zeitliche Koordination der Lichtquellen und deren beweglichen Optiken, um die gewünschte Lichtverteilung zu realisieren. Die Steuerelektronik für die beweglichen Optiken kann komplett in der übergeordneten Elektronikeinheit integriert sein, oder kann aber auch zum Teil oder komplett in eine eigene Einheit ausgelagert sein.

Vorzugsweise weist die erfindungsgemäße Beleuchtungseinrichtung eine Steuereinheit für die oben genannte Bewegungsvorrichtung auf, mittels der die Translation oder die Schwenkbewegung oder die Rotation oder eine Kombination aus den vorgenannten Bewegungen der mindestens einen lichtbrechenden Optik gesteuert wird. Insbesondere ist die Steuereinheit derart ausgebildet, dass sie im Fall der Verwendung der vorgenannten piezoelektrischen Elemente die Steuerung dieser piezoelektrischen Elemente übernimmt. Die Steuereinheit ermöglicht eine Steuerung des Bewegungszustands der mindestens einen lichtbrechenden Optik in Abhängigkeit vom Beleuchtungszustand der Halbleiterlichtquellen der erfindungsgemäßen Beleuchtungseinrichtung. Der gewünschte Beleuchtungszustand der Halbleiterlichtquellen kann sich aus einer kamerabasierten Bildanalyse der Verkehrssituation ergeben. Dabei kann die Bildrate mehrere Hundert Herz oder größer betragen.

Die erfindungsgemäße Beleuchtungseinrichtung besitzt vorteilhafterweise eine Optik zur Abbildung des von dem mindestens einen Lichtwellenlängenkonversionselement ausgehenden Lichts. Diese Optik ermöglicht eine Abbildung der auf dem mindestens einen Lichtwellenlängenkonversionselement erzeugten Lichtverteilung auf den Fahrweg vor dem Fahrzeug. Mittels dieser Optik kann sowohl das von dem mindestens einen Lichtwellenlängenkonversionselement ausgehende konvertierte Licht als auch das nicht-konvertierte Licht abgebildet werden.

Die erfindungsgemäße Beleuchtungseinrichtung ist vorzugsweise als Bestandteil eines Kraftfahrzeugscheinwerfers ausgebildet, der zum Erzeugen von einer oder mehreren Lichtverteilungen aus der Gruppe von Abblendlichtverteilung, Fernlichtverteilung, Tagfahrlichtverteilung, Positionslichtverteilung, Abbiegelichtverteilung und Nebellichtverteilung dient. Zusätzlich kann die erfindungsgemäße Beleuchtungseinrichtung auch eine Kurvenlichtfunktion vorsehen oder als Bestandteil eines Adaptive Front Lighting Systems (AFS) ausgebildet sein. Weitere Anwendungsbereiche der erfindungsgemäßen Beleuchtungseinrichtung sind Effektscheinwerfer für die Unterhaltungsindustrie, Leuchten für die Architekturbeleuchtung sowie für dynamische Lichtshows und dergleichen.

### III. Beschreibung der bevorzugten Ausführungsbeispiele

Nachstehend wird die Erfindung anhand von bevorzugten Ausführungsbeispielen näher erläutert. Es zeigen:
- Figur 1: eine Seitenansicht einer Beleuchtungseinrichtung gemäß dem ersten Ausführungsbeispiel der Erfindung in schematischer Darstellung
- Figur 2: eine Draufsicht auf die in Figur 1 abgebildete Beleuchtungseinrichtung in schematischer Darstellung
- Figur 3: eine vergrößerte, schematische Darstellung eines Teils der in den Figuren 1 und 2 abgebildeten Beleuchtungseinrichtung
- Figur 4: eine Draufsicht auf eine Oberfläche des Lichtwellenlängenkonversionselements der in den Figuren 1 bis 3 abgebildeten Beleuchtungseinrichtung in schematischer Darstellung
- Figur 5: eine Draufsicht auf eine Oberfläche des Lichtwellenlängenkonversionselements der in den Figuren 1 bis 3 abgebildeten Beleuchtungseinrichtung mit Darstellung eines Laserspots in schematischer Darstellung
- Figur 6: eine erste Lichtverteilung, die mittels der Beleuchtungseinrichtung gemäß dem ersten Ausführungsbeispiel auf der Oberfläche des Lichtwellenlängenkonversionselements erzeugt wurde
- Figur 7: eine zweite Lichtverteilung, die mittels der Beleuchtungseinrichtung gemäß dem ersten Ausführungsbeispiel auf der Oberfläche des Lichtwellenlängenkonversionselements erzeugt wurde
- Figur 8: eine Seitenansicht einer Beleuchtungseinrichtung gemäß dem zweiten Ausführungsbeispiel der Erfindung in schematischer Darstellung
- Figur 9: eine Seitenansicht einer Beleuchtungseinrichtung gemäß dem dritten Ausführungsbeispiel der Erfindung in schematischer Darstellung

Bei den bevorzugten Ausführungsbeispielen der Erfindung handelt es sich um Beleuchtungseinrichtungen, die zur Verwendung in einem Kraftfahrzeugscheinwerfer im Frontbereich des Kraftfahrzeugs vorgesehen sind, um Lichtverteilungen für mindestens eine der Beleuchtungsfunktionen Abblendlicht, Fernlicht, Tagfahrlicht, Nebellicht, Abbiegelicht, AFS-Licht, wie beispielsweise Autobahnlicht, Schlechtwetterlicht, Stadtlicht, Markierungslicht etc., jeweils optional inklusive Kurvenlicht, und Positionslicht zu erzeugen.

Die Beleuchtungseinrichtung gemäß dem ersten Ausführungsbeispiel der Erfindung besitzt neunundvierzig Laserdioden 2, die auf einem gemeinsamen Träger 1 angeordnet sind. Der Träger 1 ist als Halbleitersubstrat ausgebildet und besteht im Wesentlichen aus demselben Halbleitermaterial wie die Laserdioden 2. Der Träger 1 enthält metallische Flächen 6, die als elektrische Kontakte oder elektrische Leitungen dienen und metallische Schichten, die zur Kühlung dienen. Die Laserdioden 2 sind mit Abstand zueinander zeilenweise und spaltenweise in sieben Zeilen und sieben Spalten auf einer Oberfläche des Trägers 1 angeordnet und bilden dadurch ein Feld von Laserdioden 2. Jeder Laserdiode 2 ist eine optische Linse 3 zugeordnet. Außerdem weist die Beleuchtungseinrichtung gemäß dem ersten Ausführungsbeispiel der Erfindung neunundvierzig optische Linsen 3 und ein Lichtwellenlängenkonversionselement 4 auf. Jeder Laserdiode 2 ist genau eine der optischen Linsen 3 zugeordnet und umgekehrt. Die optischen Linsen 3 dienen dazu, das von der ihr zugeordneten Laserdiode 2 emittierte Licht auf eine Oberfläche des Lichtwellenlängenkonversionselements 4 zu lenken.

Die Laserdioden 2 sind aus dem Halbleitermaterial des Trägers 1 geformt und bestehen jeweils in bekannter Weise aus Halbleiterschichten mit unterschiedlicher Dotierung des Halbleitermaterials. Die Laserdioden 2 sind derart ausgebildet, dass sie während ihres Betriebs jeweils blaues Licht mit einer Wellenlänge aus dem Wellenlängenbereich von 380 Nanometer bis 490 Nanometer emittieren. Das von den Laserdioden 2 emittierte Licht wird nachstehend auch Primärlicht genannt. Die Laserdioden 2 sind jeweils über auf dem Träger 1 angeordnete metallische Kontakte und elektrische Leitungen 80 mit einer Betriebsvorrichtung 8 verbunden. Die Betriebsvorrichtung 8 umfasst eine Schaltungsanordnung zur Strom- und Spannungsregelung für die Laserdioden 2 und ermöglicht eine Ansteuerung jeder einzelnen Laserdiode 2. Insbesondere kann jede Laserdiode 2 mittels der Betriebsvorrichtung 8 separat ein- und ausgeschaltet werden und die Helligkeit jeder Laserdiode 2 kann mittels der Betriebsvorrichtung 8 separat geregelt werden. Die Energieversorgung der Betriebsvorrichtung 8 und der gesamten Beleuchtungseinrichtung erfolgt mit Hilfe von elektrischen Anschlüssen 81, 82, die mit der Bordnetzspannungsquelle des Kraftfahrzeugs verbunden sind.

Jede optische Linse 3 wird von drei Säulen 5 getragen, die auf der Oberfläche des Trägers 1 angeordnet sind. Die mit dem Träger 1 verbundenen Abschnitte der drei Säulen 5 einer optischen Linse 3 definieren auf der Oberfläche des Trägers 1 die Eckpunkte eines gleichseitigen Dreiecks, in dessen Mitte die der optischen Linse 3 zugeordnete Laserdiode 2 angeordnet ist. Die Säulen 5 enthalten jeweils drei, durch Abstandselemente voneinander getrennte piezoelektrische Elemente 51, 52 und 53, die eine Bewegung der optischen Linse 3 in alle Raumrichtungen und Kipp- oder Schwenkbewegungen der von den Säulen 5 getragenen optischen Linsen 3 ermöglichen. Insbesondere kann eine optische Linse 3 mit Hilfe der drei piezoelektrischen Elemente 51, die in den drei die optische Linse 3 tragenden Säulen 5 angeordnet sind, in eine Richtung parallel zur Oberfläche des Trägers 1 bewegt werden, in der die Laserdioden 2 angeordnet sind. Zusätzlich kann diese optische Linse 3 mit Hilfe der piezoelektrischen Elemente 52, die in den sie tragenden Säulen 5 angeordnet sind, in die Richtung bewegt werden, die senkrecht zur vorgenannten Bewegungsrichtung und parallel zur Oberfläche des Trägers 1 ist, in der die Laserdioden 2 angeordnet sind. Das heißt, mit Hilfe der piezoelektrischen Elemente 51, 52 kann die optische Linse 3 in alle möglichen Richtungen parallel zur Oberfläche des Trägers 1, in der die Laserdioden 2 angeordnet sind, bewegt werden. Zusätzlich kann diese optische Linse 3 mit Hilfe der drei piezoelektrischen Elemente 53, die in den sie tragenden Säulen 5 angeordnet sind, senkrecht zur vorgenannten Oberfläche des Trägers 1 bewegt werden. Insbesondere kann mit Hilfe der piezoelektrischen Elemente 53 der Abstand der optischen Linse 3 zum Träger 1 und damit zu der ihr zugeordneten Laserdiode 2 verändert werden. Durch unterschiedliche Ansteuerung der drei piezoelektrischen Elemente 53, die in den drei die optische Linse 3 tragenden Säulen 5 angeordnet sind, kann außerdem die optische Linse 3 gekippt oder geschwenkt werden, wobei die Schwenkachse in einer Ebene parallel zur Oberfläche des Trägers 1 liegt, in der die Laserdioden 2 angeordnet sind. Die Ansteuerung der piezoelektrischen Elemente 51, 52, 53 in den Säulen 5 wird mit Hilfe einer Steuereinheit 7 durchgeführt, die durch elektrische Leitungen 70 und metallische Kontakte 6 auf dem Träger 1 mit allen piezoelektrischen Elementen 51, 52, 53 verbunden ist. Eine Steuerleitung 83 zwischen der Steuereinheit 7 und der Betriebsvorrichtung 8 ermöglicht für jede optische Linse eine Steuerung der piezoelektrischen Elemente 51, 52, 53 in den sie tragenden Säulen 5 in Abhängigkeit vom Betriebszustand der Laserdiode 2, die der optischen Linse 3 zugeordnet ist.

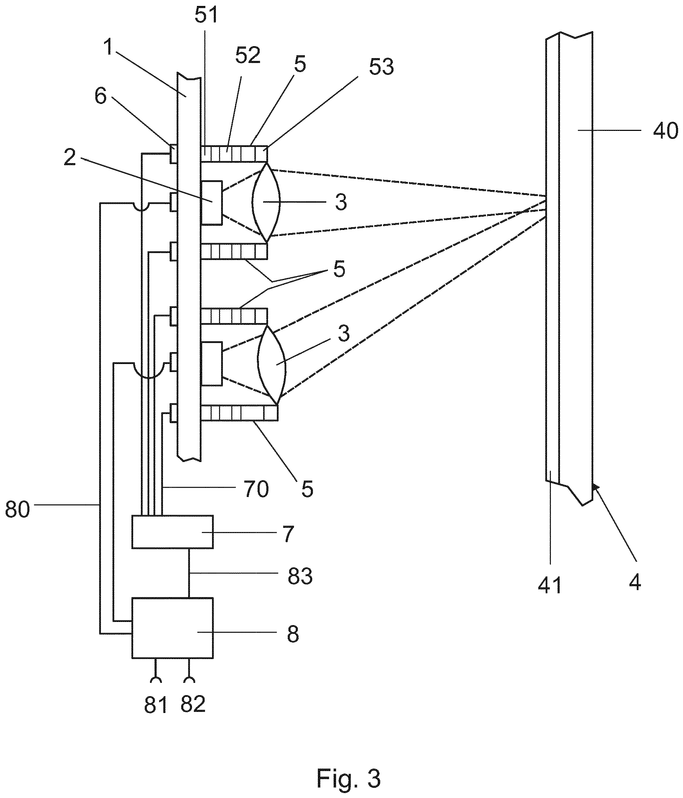

In Figur 3 ist schematisch ein Teil der Beleuchtungseinrichtung gemäß dem ersten Ausführungsbeispiel der Erfindung mit nur zwei der Laserdioden 2 und den ihnen zugeordneten optischen Elementen 3 dargestellt. Eine der beiden optischen Linsen 3 ist mittels der piezoelektrischen Elemente 53 in ihren drei Säulen 5 geneigt, so dass die von den Laserdioden 2 emittierten Lichtbündel mittels der ihnen zugeordneten optischen Linsen 3 auf denselben Oberflächenabschnitt des Lichtwellenlängenkonversionselements 4 gelenkt werden.

Die optischen Linsen 3 bestehen aus Glas oder transparentem Silikon oder transparentem Kunststoff. Gemäß den in den Figuren abgebildeten Ausführungsbeispielen der erfindungsgemäßen Beleuchtungseinrichtung sind die optischen Linsen 3 als konvexe optische Linsen 3 ausgebildet, welche die Divergenz der von den Laserdioden 2 emittierten Lichtbündel verringern. Alternativ können die optischen Linsen 3 beispielsweise aber auch als konkave optische Linsen ausgebildet sein, welche die Divergenz der von den Laserdioden 2 emittierten Lichtbündel vergrößert, um auf dem Lichtwellenlängenkonversionselement 4 einen größeren Laserspot zu erzielen. Außerdem können die optischen Linsen 3 auch beliebige andere Formen besitzen, um die gewünschte Lichtverteilung auf dem Lichtwellenlängenkonversionselement 4 zu erhalten. Beispielsweise können die Linsen 3 auch asymmetrisch bezüglich Rotation um ihre optische Achse ausgebildet sein.

Das Lichtwellenlängenkonversionselement 4 der Beleuchtungseinrichtung gemäß dem ersten Ausführungsbeispiel der Erfindung besteht aus einer lichtdurchlässigen Saphirplatte 40, die auf einer Oberfläche mit Leuchtstoff 41 beschichtet ist. Als Leuchtstoff 41 dient mit Cer dotiertes Yttriumaluminiumgranat (YAG:Ce). Die mit Leuchtstoff 41 beschichtete Oberfläche der Saphirplatte 40 ist dem Träger 1 für die Laserdioden 2 und die optischen Linsen 3 zugewandt. Alternativ kann aber die mit Leuchtstoff 41 beschichtete Oberfläche der Saphirplatte 40 vom Träger 1 für die Leuchtdioden 2 und die optischen Linsen 3 abgewandt sein. Das von den Laserdioden 2 emittierte Primärlicht wird mittels der optischen Linsen 3 auf den Leuchtstoff 41 des Lichtwellenlängenkonversionselements 4 gelenkt und mit Hilfe des Leuchtstoffs 41 anteilig in Licht anderer Wellenlänge konvertiert, das nachstehend auch Sekundärlicht genannt wird. Das vom Leuchtstoff 41 erzeugte Sekundärlicht besitzt ein Intensitätsmaximum im Wellenlängenbereich von 500 Nanometer bis 600 Nanometer. Dadurch strahlt das Lichtwellenlängenkonversionselement 4 an seiner vom Leuchtstoff 41 abgewandten Seite weißes Licht ab, das eine Mischung aus nicht-konvertiertem Primärlicht und vom Leuchtstoff 41 erzeugtem Sekundärlicht ist. Der relative Anteil von Sekundärlicht und nicht-konvertiertem Primärlicht in dem vom Lichtwellenlängenkonversionselement 4 abgestrahlten weißen Licht ist abhängig von der Schichtdicke des Leuchtstoffs 41 auf der Saphirplatte 40.

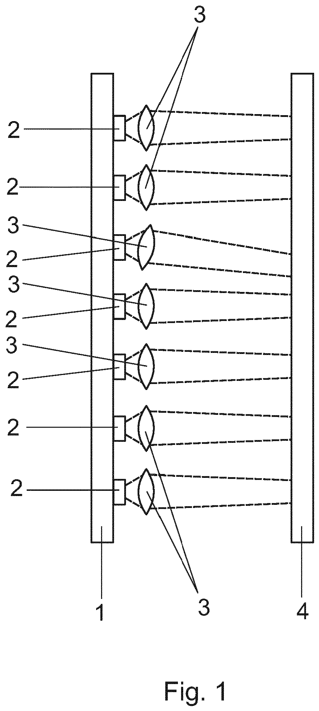

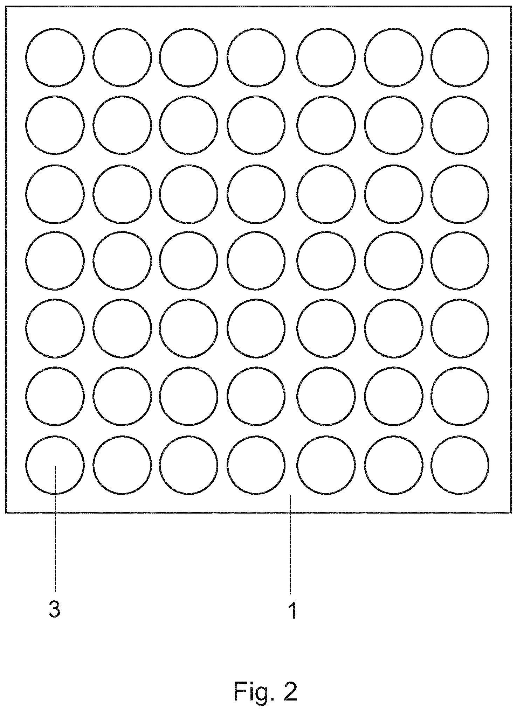

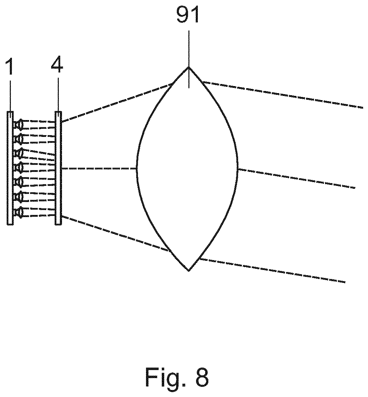

In Figur 8 ist schematisch eine Beleuchtungseinrichtung gemäß dem zweiten Ausführungsbeispiel der Erfindung dargestellt. Diese Beleuchtungseinrichtung unterscheidet sich von der Beleuchtungseinrichtung gemäß dem ersten Ausführungsbeispiel nur durch eine zusätzliche refraktive Sekundäroptik 91, die das vom Lichtwellenlängenkonversionselement 4 abgestrahlte Licht auf die Fahrbahn vor dem Fahrzeug projiziert. In allen anderen Details stimmen die Beleuchtungseinrichtungen gemäß dem ersten und zweiten Ausführungsbeispiel der Erfindung überein. Daher werden in den Figuren 1 bis 8 identische Komponenten der Beleuchtungseinrichtungen beider Ausführungsbeispiele mit demselben Bezugszeichen bezeichnet und für deren Beschreibung wird auf die Beschreibung des ersten Ausführungsbeispiels verwiesen. Bei der Abbildung der lichtabstrahlenden Oberfläche des Lichtwellenlängenkonversionselements 4 durch die refraktive Sekundäroptik 91 bleibt die Form der Lichtverteilung, die mit Hilfe des Primärlichts und der optischen Linsen 3 auf der Oberfläche des Lichtwellenlängenkonversionselements 4 erzeugt wird, erhalten. Die Sekundäroptik 91 projiziert die mittels Primärlicht und optische Linsen 3 auf dem Lichtwellenlängenkonversionselement 4 erzeugte Lichtverteilung in das Fernfeld vor dem Fahrzeug, wobei mittels des Leuchtstoffs 41 das Primärlicht anteilig in Sekundärlicht konvertiert wird.

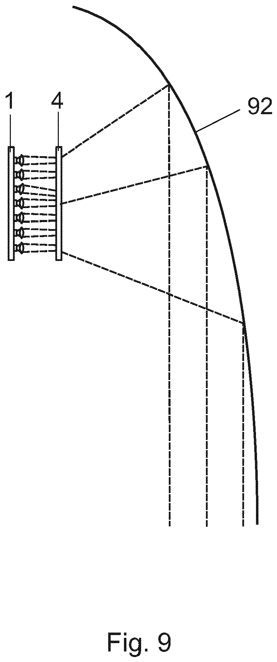

In Figur 9 ist schematisch eine Beleuchtungseinrichtung gemäß dem dritten Ausführungsbeispiel der Erfindung dargestellt. Diese Beleuchtungseinrichtung unterscheidet sich von der Beleuchtungseinrichtung gemäß dem ersten Ausführungsbeispiel nur durch eine zusätzliche, als Reflektor ausgebildete Sekundäroptik 92, die das vom Lichtwellenlängenkonversionselement 4 abgestrahlte Licht auf die Fahrbahn vor dem Fahrzeug reflektiert. In allen anderen Details stimmen die Beleuchtungseinrichtungen gemäß dem ersten und dritten Ausführungsbeispiel der Erfindung überein. Daher werden in den Figuren 1 bis 8 identische Komponenten der Beleuchtungseinrichtungen beider Ausführungsbeispiele mit demselben Bezugszeichen bezeichnet und für deren Beschreibung wird auf die Beschreibung des ersten Ausführungsbeispiels verwiesen. Der Reflektor 92 reflektiert die mittels des Primärlichts und der optischen Linsen 3 auf dem Lichtwellenlängenkonversionselement 4 erzeugte Lichtverteilung auf den Fahrweg vor dem Fahrzeug, wobei das Primärlicht durch den Leuchtstoff 41 anteilig in Sekundärlicht konvertiert wird.

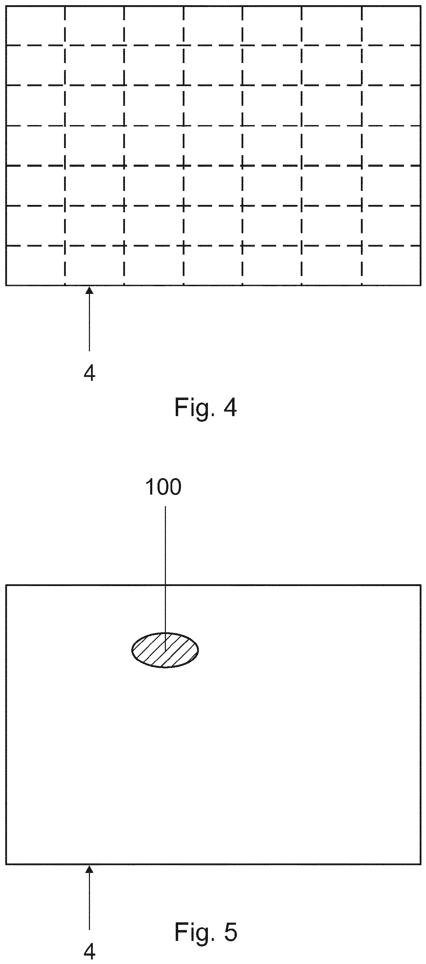

In Figur 4 ist schematisch die mit Leuchtstoff 41 beschichtete Oberfläche der Saphirplatte 40 des Lichtwellenlängenkonversionselements 4 dargestellt. Gemäß den bevorzugten Ausführungsbeispielen der erfindungsgemäßen Beleuchtungseinrichtung besitzt die Saphirplatte 40 und damit das Lichtwellenlängenkonversionselement 4 eine rechteckige Form. Die mit Leuchtstoff 41 beschichtete Oberfläche der Saphirplatte 40 bzw. des Lichtwellenlängenkonversionselements 4 ist einteilig, homogen und unstrukturiert ausgebildet. Mit Hilfe von gestrichelten Linien ist in Figur 4 beispielhaft eine erste Lichtverteilung dargestellt, die mittels des von den Laserdioden 2 emittierten Primärlichts und den ihnen zugeordneten optischen Linsen 3 auf der mit Leuchtstoff 41 beschichteten Oberfläche des Lichtwellenlängenkonversionselements 4 erzeugt wird.

Bei der in Figur 4 dargestellten Lichtverteilung wird die mit Leuchtstoff 41 beschichtete Oberfläche des Lichtwellenlängenkonversionselements 4 gleichmäßig, das heißt mit gleicher Intensität, mit Primärlicht beleuchtet, wobei jede der neunundvierzig Laserdioden 2 mittels der ihr zugeordneten optischen Linse 3 genau eine der durch die gestrichelten Linien dargestellten Zonen der mit Leuchtstoff 41 beschichteten Oberfläche des Lichtwellenlängenkonversionselements 4 beleuchtet.

In Figur 5 ist schematisch ein Laserspot 100 auf der mit Leuchtstoff 41 beschichteten Oberfläche des Lichtwellenlängenkonversionselements 4 dargestellt. Der Laserspot 100 wird mit Hilfe der Laserdiode 2, die in der zweiten Zeile und dritten Reihe des Feldes von Laserdioden 2 angeordnet ist, und der dieser Laserdiode 2 zugeordneten optischen Linse 3 erzeugt. Gemäß den bevorzugten Ausführungsbeispielen der erfindungsgemäßen Beleuchtungseinrichtung sind die Laserdioden 2 und die ihnen zugeordneten optischen Linsen 3 derart ausgebildet, dass sie auf der mit Leuchtstoff 41 beschichteten Oberfläche des Lichtwellenlängenkonversionselements 4 Laserspots mit elliptischer Kontur erzeugen. Die Größe und die Lage des Laserspots 100 auf der mit Leuchtstoff 41 beschichteten Oberfläche des Lichtwellenlängenkonversionselements 4 wird mit Hilfe der piezoelektrischen Elemente 51, 52, 53 und der Steuereinheit 7 variiert.

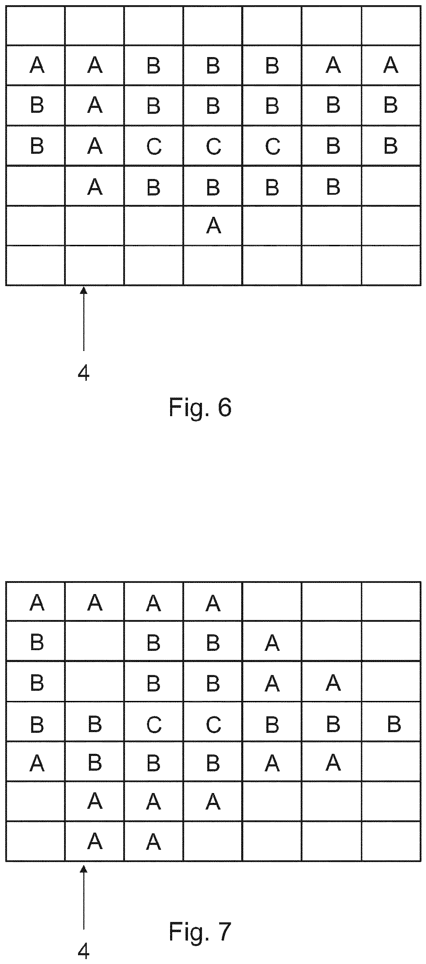

In den Figuren 6 und 7 sind beispielhaft zwei weitere Lichtverteilungen auf der mit Leuchtstoff 41 beschichteten Oberfläche des Lichtwellenlängenkonversionselements 4 schematisch dargestellt, die mit Hilfe der zeilenweise und spaltenweise angeordneten Laserdioden 2 und der ihnen zugeordneten optischen Linsen 3 erzeugt werden. Die mit dem Buchstaben A gekennzeichneten Zonen der mit Leuchtstoff 41 beschichteten Oberfläche des Lichtwellenlängenkonversionselements 4 werden mit Primärlicht beleuchtet, das jeweils von nur einer Laserdiode 2 erzeugt und mittels der ihr zugeordneten optischen Linse 3 auf das Lichtwellenlängenkonversionselement 4 gelenkt wird. Die mit dem Buchstaben B gekennzeichneten Zonen der mit Leuchtstoff 41 beschichteten Oberfläche des Lichtwellenlängenkonversionselements 4 werden mit Primärlicht beleuchtet, das jeweils von zwei Laserdioden 2 erzeugt und mittels den ihnen zugeordneten optischen Linse 3 auf das Lichtwellenlängenkonversionselement 4 gelenkt wird. Die mit dem Buchstaben C gekennzeichneten Zonen der mit Leuchtstoff 41 beschichteten Oberfläche des Lichtwellenlängenkonversionselements 4 werden mit Primärlicht beleuchtet, das jeweils von drei Laserdioden 2 erzeugt und mittels den ihnen zugeordneten optischen Linse 3 auf das Lichtwellenlängenkonversionselement 4 gelenkt wird und die nicht bezeichneten Zonen der mit Leuchtstoff 41 beschichteten Oberfläche des Lichtwellenlängenkonversionselements 4 werden nicht mit Primärlicht beleuchtet. Die Darstellung der Lichtverteilungen in den Figuren 6 und 7 ist nur schematisch. Die Intensitätsprofile bzw. Positionen und Größe der Laserspots werden in der Praxis so eingestellt, dass ein stetiger Übergang zwischen den unterschiedlichen Bereichen erreicht wird.

Die Beleuchtung der vorgenannten Zonen wird mit Hilfe der piezoelektrischen Element 51, 52, 53 durchgeführt, welche die optischen Linsen 3 derart relativ zu der ihnen zugeordneten Laserdiode 2 und dem Lichtwellenlängenkonversionselement 4 in Abhängigkeit von Steuerbefehlen, die von der Steuereinheit 7 an die piezoelektrischen Elemente 51, 52, 53 übermittelt werden, bewegen, dass die vorgenannten Zonen der mit Leuchtstoff 41 beschichteten Oberfläche des Lichtwellenlängenkonversionselements 4 mit Primärlicht von einer oder mehreren Laserdioden 2 oder gar nicht beleuchtet werden.

Zusätzlich kann mit Hilfe der Betriebsvorrichtung 8 während des Umschaltens zwischen zwei Lichtverteilungen die Helligkeit des von allen oder von einzelnen Laserdioden 2 emittierten Lichts variiert werden. Beispielsweise kann beim Umschalten von einer Tagfahrlichtverteilung auf eine Positionslichtverteilung die Helligkeit des von allen Laserdioden 2 emittierten Lichts auf ein bestimmtes Niveau reduziert und beim Umschalten von der Positionslichtverteilung auf die Tagfahrlichtverteilung auf ein höheres Niveau geregelt werden.

Die in Figur 6 dargestellte, im Wesentlichen symmetrische Lichtverteilung entspricht beispielsweise einer Fernlichtverteilung, die mittels der Sekundäroptik 91 oder 92 auf die Fahrbahn vor dem Fahrzeug abgebildet wird.

Die in Figur 7 dargestellte unsymmetrische Lichtverteilung entspricht beispielsweise einer Fernlichtverteilung mit überlagerter Kurvenlichtverteilung während einer Rechtskurve des Fahrzeugs, wobei die Zone in der zweiten Spalte und zweiten sowie dritten Spalte unbeleuchtet ist, um beispielsweise die Blendung eines Fahrzeugs aus dem Gegenverkehr oder eines Fußgängers zu vermeiden.

Die Umschaltung zwischen den in Figuren 6 und 7 dargestellten Lichtverteilungen sowie gegebenenfalls weiteren Lichtverteilungen erfolgt bei der Beleuchtungseinrichtung gemäß den bevorzugten Ausführungsbeispielen mit Hilfe der beweglichen optischen Linsen 3 über die Steuereinheit 7 und die piezoelektrischen Elemente 51, 52, 53.

Die auf der mit Leuchtstoff 41 beschichteten Oberfläche des Lichtwellenlängenkonversionselements 4 erzeugten Lichtverteilungen werden gegebenenfalls durch die Sekundäroptik 91, 92 mit vertauschten Seiten sowie Vertauschung von Oben und Unten auf die Fahrbahn vor dem Fahrzeug abgebildet.

Die Erfindung beschränkt sich nicht auf die oben näher erläuterten Ausführungsbeispiele der Erfindung. Beispielsweise können die optischen Linsen 3 nicht nur zum Umschalten zwischen den Lichtverteilungen bewegt werden, sondern es ist beispielsweise auch möglich, zum Erzeugen einer Lichtverteilung die optischen Linsen 3 mittels der piezoelektrischen Elemente um eine Ruhelage oszillieren zu lassen, um eine homogenere Beleuchtung des Lichtwellenlängenkonversionselements 4 zu gewährleisten und gegebenenfalls dunkle Streifen zwischen Zonen, die von unterschiedlichen Laserdioden 2 beleuchtet werden, zu vermeiden.

Außerdem können anstelle von piezoelektrischen Elementen auch Schrittmotoren zum Bewegen der optischen Linsen verwendet werden. Ferner ist es möglich, die Kontur des Laserstrahlprofils der Laserdioden 2 und die Form des Lichtwellenlängenkonversionselements 4 zwecks Anpassung an die gewünschte Anwendung zu verändern. Außerdem kann auch die Anzahl der Laserdioden 2 und der optischen Linsen 3 verändert werden. Beispielsweise kann eine gemeinsame bewegliche optische Linse für mehrere Laserdioden vorgesehen sein, so dass Licht von mehreren Laserdioden über eine gemeinsame bewegliche optische Linse auf das Lichtwellenlängenkonversionselement gelenkt wird. Ebenso können mehrere Komponenten gruppiert werden, so dass beispielsweise mehrere Linsen nur gemeinsam vor ihren zugehörigen Laserdioden verschoben werden können.

Ferner ist es auch möglich, dass nur eine oder nur ein Teil der optischen Linsen 3 beweglich angeordnet ist.

Die optischen Linsen 3 können auch durch ein optisches System aus mehreren optischen Elementen ersetzt werden, z.B. um Abbildungsfehler zu minimieren.

Auch können Gruppen von Laserdioden 2, beispielsweise alle Laserdioden 2 einer Zeile, oder alle Laserdioden einer Spalte, gebildet werden, denen eine gemeinsame, schwenkbare Optik zugeordnet ist.

Das Leuchtstoffelement 4 kann aus Bereichen unterschiedlicher Leuchtstoffkombination zusammen gesetzt sein. Einzelne Bereiche des Leuchtstoffelementes 4 können gleiche oder unterschiedliche Schichtdicke besitzen.

Die Laserdioden 2 können gleiche oder unterschiedliche Wellenlängen emittieren.

Die in den Figuren 6 und 7 dargestellten Leuchtstoffbereiche A, B und C können in ihren lateralen Dimensionen unterschiedlich ausgeformt sein. So können beispielsweise in der Mitte des Leuchtstoffelements 4 liegende Leuchtstoffbereiche eine kleinere vertikale Dimension aufweisen mit der Folge, dass die durch diese Leuchtstoffbereiche ausgebildeten Zeilen schmäler ausgebildet sind. Die lateralen Dimensionen der jeweiligen Leuchtstoffbereiche können dynamisch den Gegebenheiten entsprechend angepasst bzw. moduliert werden.

Es ist möglich mehrere Lichtquellen und zugehörige Optiken zu Untereinheiten zusammenzufassen (mechanisch oder elektronisch oder mechanisch und elektronisch) und deren Spots auf dem Konversionsfarbstoff dauerhaft oder zeitweise synchron zu bewegen. Bei einer zeitweisen, synchronen Bewegung kann die Zusammenfassung zur Untereinheit elektronisch nur für die Dauer der Synchronisation erfolgen.

Die Erfindung ist nicht beschränkt auf die in Figur 4 gezeigte Aufteilung der Beleuchtungsbereiche auf dem Konversionsfarbstoff. Auch andere Formen, Formfaktoren und Aufteilungen, insbesondere auch verschiedene der Helligkeitsverteilung innerhalb der Beleuchtungsbereiche sind möglich.

Bei den oben beschriebenen Ausführungsbeispielen der erfindungsgemäßen Beleuchtungseinrichtung wird das Lichtwellenlängenkonversionselement 4 in Transmission betrieben, das heißt, Primärlicht und Sekundärlicht durchdringen die Saphirplatte 40 des Lichtwellenlängenkonversionselements 4 und es wird das die Saphirplatte 40 durchdringende Primärlicht für die Abbildung durch die Sekundäroptik 91, 92 genutzt. Alternativ könnte das Lichtwellenlängenkonversionselement 4 anstelle der Saphirplatte 40 aber auch einen lichtreflektierenden Träger für den Leuchtstoff 41 besitzen und mittels geeigneter Sekundäroptiken, beispielsweise mittels eines Reflektors oder einer Kombination von mehreren Reflektoren, das an dem lichtreflektierenden Träger reflektierte Primärlicht und Sekundärlicht auf die Fahrbahn vor dem Fahrzeug gelenkt werden. Alternativ kann aber bei der reflektiven Leuchtstoffanordnung auch eine refraktive sekundäre Optik verwendet werden.

## Patentansprüche

1. Beleuchtungseinrichtung für Fahrzeuge mit mehreren Laserdioden (2) zum Erzeugen von Primärlicht und mindestens einem Lichtwellenlängenkonversionselement (4) zur Wellenlängenkonversion des von den Halbleiterlichtquellen (2) emittierten Primärlichts, wobei jeder Laserdiode (2) mindestens eine lichtbrechende Optik (3) zugeordnet ist, die dazu ausgebildet ist, von der jeweiligen Laserdiode (2) emittiertes Primärlicht auf das mindestens eine Lichtwellenlängenkonversionselement (4) zu lenken, wobei die mindestens eine lichtbrechende Optik (3) beweglich bezüglich der Laserdiode (2) angeordnet ist, der sie zugeordnet ist,
wobei eine Bewegungsvorrichtung (5), die mindestens ein piezoelektrisches Element umfasst (51, 52, 53), zum Bewegen der mindestens einen lichtbrechenden Optik (3) und eine Steuereinheit (7) für die Bewegungsvorrichtung (5) vorgesehen sind, wobei Zonen (A, B, C) einer Leuchtstoff (41) aufweisenden Oberfläche des mindestens einen Lichtwellenlängenkonversionselements (4) mit Primärlicht von einer unterschiedlichen Anzahl von Laserdioden (2) beleuchtbar sind, **dadurch gekennzeichnet, dass** die Laserdioden (2) und die mindestens eine lichtbrechende Optik (3) auf einem gemeinsamen Träger (1) angeordnet sind, und dass die mindestens eine lichtbrechende Optik (3) von drei Säulen (5) getragen wird, die jeweils das mindestens eine piezoelektrische Element (51, 52, 53) umfassen und auf der Oberfläche des Trägers (1) angeordnet sind, wobei die mit dem Träger (1) verbundenen Abschnitte der drei Säulen (5) auf der Oberfläche des Trägers (1) Eckpunkte eines Dreiecks ausbilden, in dessen Mitte die der lichtbrechenden Optik (3) zugeordnete Laserdiode (2) angeordnet ist.

2. Beleuchtungseinrichtung nach Anspruch 1, wobei die mindestens eine lichtbrechende Optik (3) schwenkbar verschiebbar oder drehbar, oder schwenkbar und verschiebbar, oder schwenkbar und drehbar, oder verschiebbar und drehbar, oder schwenkbar und verschiebbar und drehbar ausgebildet ist.

3. Beleuchtungseinrichtung nach einem der Ansprüche 1 bis 2, wobei die Beleuchtungseinrichtung eine Betriebsvorrichtung (8) zum Betreiben der Laserdioden (2) aufweist.

4. Beleuchtungseinrichtung nach einem der Ansprüche 1 bis 3, wobei eine Optik (91, 92) zur Abbildung des von dem mindestens einen Lichtwellenlängenkonversionselement (4) ausgehenden Lichts vorgesehen ist.

5. Kraftfahrzeugscheinwerfer mit mindestens einer Beleuchtungseinrichtung nach einem der Ansprüche 1 bis 4.

## Claims

1. Illumination device for vehicles having a plurality of laser diodes (2) for generating primary light and at least one light wavelength conversion element (4) for the wavelength conversion of the primary light emitted by the semiconductor light sources (2), wherein each laser diode (2) is assigned at least one light-refracting optical unit (3) that is designed to direct primary light emitted by the respective laser diode (2) onto the at least one light wavelength conversion element (4), wherein the at least one light-refracting optical unit (3) is arranged movably with respect to the laser diode (2) to with which it is assigned,
wherein a movement apparatus (5), which comprises at least one piezoelectric element (51, 52, 53), for moving the at least one light-refracting optical unit (3), and a control unit (7) for the movement apparatus (5) are provided, wherein zones (A, B, C) of a surface of the at least one light wavelength conversion element (4) that includes a phosphor (41) can be illuminated with primary light from a different number of laser diodes (2), **characterized in that** the laser diodes (2) and the at least one light-refracting optical unit (3) are arranged on a common carrier (1), and **in that** the at least one light-refracting optical unit (3) is carried by three columns (5), which each comprise the at least one piezoelectric element (51, 52, 53) and are arranged on the surface of the carrier (1), wherein the sections of the three columns (5) that are connected to the carrier (1) form corner points of a triangle on the surface of the carrier (1), at the centre of which triangle the laser diode (2) assigned to the light-refracting optical unit (3) is arranged.

2. Illumination device according to Claim 1, wherein the at least one light-refracting optical unit (3) is designed to be pivotable, slidable or rotatable, or pivotable and slidable, or pivotable and rotatable, or slidable and rotatable, or pivotable and slidable and rotatable.

3. Illumination device according to one of Claims 1 to 2, wherein the illumination device has an operating apparatus (8) for operating the laser diodes (2).

4. Illumination device according to one of Claims 1 to 3, wherein an optical unit (91, 92) is provided for imaging the light emerging from the at least one light wavelength conversion element (4).

5. Motor vehicle headlight having at least one illumination device according to one of Claims 1 to 4.

## Revendications

1. Dispositif d'éclairage pour véhicules comprenant plusieurs diodes laser (2) destinées à générer de la lumière primaire, et au moins un élément de conversion de longueur d'onde de lumière (4) destiné à la conversion de longueur d'onde de la lumière primaire émise par les sources de lumière de semiconducteurs (2), dans lequel au moins un dispositif optique (3) réfringent est associé à chaque diode laser (2), lequel est réalisé pour dévier la lumière primaire émise par la diode laser (2) respective sur l'au moins un élément de conversion de longueur d'onde de lumière (4), dans lequel l'au moins un dispositif optique (3) réfringent est disposé de manière mobile par rapport à la diode laser (2) à laquelle il est associé,
dans lequel sont disposés un dispositif de déplacement (5), qui comprend au moins un élément piézoélectrique (51, 52, 53), destiné à déplacer l'au moins un dispositif optique (3) réfringent et une unité de commande (7) pour le dispositif de déplacement (5), dans lequel des zones (A, B, C) d'une surface, présentant une matière luminescente (41), de l'au moins un élément de conversion de longueur d'onde de lumière (4) peuvent être éclairées avec de la lumière primaire par un nombre différent de diodes laser (2),
**caractérisé en ce que** les diodes laser (2) et l'au moins un dispositif optique (3) réfringent sont disposés sur un support commun (1), et **en ce que** l'au moins un dispositif optique (3) réfringent est supporté par trois colonnes (5) qui comprennent respectivement l'au moins un élément piézoélectrique (51, 52, 53) et sont disposées sur la surface du support (1), dans lequel les sections, reliées au support (1), des trois colonnes (5) forment sur la surface du support (1) des sommets d'un triangle au milieu duquel est disposée la diode laser (2) associée au dispositif optique (3) réfringent.

2. Dispositif d'éclairage selon la revendication 1, dans lequel l'au moins un dispositif optique (3) réfringent est réalisé de manière pivotante ou déplaçable ou rotative, ou de manière pivotante et déplaçable, ou de manière pivotante et rotative, ou de manière déplaçable et rotative, ou de manière pivotante et déplaçable et rotative.

3. Dispositif d'éclairage selon l'une quelconque des revendications 1 à 2, dans lequel le dispositif d'éclairage présente un dispositif de fonctionnement (8) destiné à faire fonctionner les diodes laser (2).

4. Dispositif d'éclairage selon l'une quelconque des revendications 1 à 3, dans lequel un dispositif optique (91, 92) est ménagé pour la représentation de la lumière partant de l'au moins un élément de conversion de longueur d'onde de lumière (4).

5. Projecteur de véhicule automobile comprenant au moins un dispositif d'éclairage selon l'une quelconque des revendications 1 à 4.
